# EUROPÄISCHE PATENTSCHRIFT

(11) **EP 0 585 893 B1**
(45) Veröffentlichungstag und Bekanntmachung des Hinweises auf die Patenterteilung: **25.11.1998**
(21) Anmeldenummer: 93113944.8
(22) Anmeldetag: 01.09.1993
(51) Int. Cl.: G01B 11/30

(54) **Verfahren und Vorrichtung zur hochgenauen Abstandsmessung von Oberflächen**
Procedure and device for very precise distance measurement of surfaces
Dispositif et procédé pour la mesure très précise de la distance de surfaces

(30) Priorität: 02.09.1992 DE 4229313
(43) Veröffentlichungstag der Anmeldung: 09.03.1994
(73) Patentinhaber: BETRIEBSFORSCHUNGSINSTITUT VDEh, INSTITUT FÜR ANGEWANDTE FORSCHUNG GmbH, D-40237 Düsseldorf (DE)
(72) Erfinder: Wurbs, Guido, Dipl.-Phys., D-40237 Düsseldorf (DE); Krüger, Bertold, Dipl.-Ing., D-47807 Krefeld (DE)
(74) Vertreter: König, Reimar, Dr.-Ing.

(56) Entgegenhaltungen:
- US-A- 4 726 685

## Beschreibung

Die Erfindung bezieht sich auf ein Verfahren der im Oberbegriff des Patentanspruchs 1 angegebenen Art. Weiterhin bezieht sich die Erfindung auf eine Vorrichtung gemäß dem Oberbegriff des Anspruchs 6.

Ein derartiges Verfahren mit Vorrichtung ist gemäß der DE-OS 34 35 033 bekannt. Danach läßt sich das Verfahren für Höhen- bzw. Abstands- Messungen in der Ebene des zu vermessenden Gegenstandes vornehmen, ohne dabei die Abbildungsoptik fokussieren zu müssen, wenn die Anordnung nach den Bedingungen der Scheimpflug'schen Regel getroffen wird. Dadurch läßt sich vor allem die Genauigkeit der Bestimmung bei einer Lichtfleckverschiebung auf dem Photoempfänger verbessern. Der möglichst klein zu haltende Lichtfleck wird dabei mit einer Kante erzeugt, die auf der zu messenden Oberfläche abgebildet wird und von dort eine Fokussierung auf den Photoempfänger erfährt. Durch Verwendung des Lasers als Lichtquelle kommt es bei rauhen Oberflächen zu einem starken Rauschen der Messwerte, vor allem durch viele, sogenannte Speckles in dem auf dem Photoempfänger abgebildeten Lichtfleck. Das hierdurch bedingte Rauschen ist umso stärker, je kleiner der Lichtfleck auf der zu vermessenden Oberfläche ist. Bei Rauhigkeitsmessungen liegt der Durchmesser bei einigen um, aus welchem Grunde ein Laserlicht zu verwenden ist. Andererseits wird aber die Ausbildung einer scharfen Kante wegen der Kleinheit des Lichtfleckes eingeschränkt.

Aus der DE-PS 29 45 251 ist bekannt, daß mit dem Triangulationsverfahren Entfernungsänderungen und damit Oberflächenprofile sehr empfindlich ausgemessen werden können. Dazu wird ein Laserstrahl schräg auf die zu vermessende Oberfläche gerichtet. Mit Hilfe einer senkrecht zur Oberfläche angeordneten Optik wird der Lichtfleck auf einem ortsempfindlichen Photoempfänger abgebildet. Der auf dem Photoempfänger abgebildete Lichtfleck verschiebt sich proportional zur Entfernungsänderung der Probe. Mit Hilfe einer Differentialphotodiode oder einer Photodiodenzeile als Photoempfänger wird zum Beispiel auf elektronischem

Wege die Verschiebung des Lichtflecks und damit die Entfernungsänderung der zu vermessenden Oberfläche bestimmt. Der Hauptnachteil ist bei diesem Verfahren, daß der Lichtfleck bei Verwendung von Laserlicht und der Vermessung von rauhen Oberflächen in viele Speckles zerfällt, was hier gleichfalls zu einem starken Rauschen der Meßwerte führt.

In der US-Patentschrift 4 726 685 ist eine Vorrichtung bzw. ein Verfahren beschrieben, mit dem Oberflächeneigenschaften, wie die Oberflächenrauheit, mit Hilfe eines Laserstrahls dadurch gemessen werden, daß der Laserstrahl auf einen bestimmten Oberflächenpunkt fokussiert und der reflektierte Strahl über eine Optik einem Strahlteiler zugeführt wird, um dann photodiodisch detektiert zu werden, indem das Strahlenbündel in der Nähe des Totalreflexionswinkels auf eine Grenzfläche auftrifft und die Einzelstrahlen je nach Einfallswinkel unterschiedlich reflektiert bzw. transmittiert werden. Die jeweilige konvergierende oder divergierende Neigung der Strahlen zueinander gibt dann über unterschiedliche Transmissionscharakteristik den Abstand des Meßpunktes zum Fokuspunkt wieder. Über einen Vergleich der photodiodischen Messungen können die Abstandswerte durch Differenzbildung ermittelt werden und Störsignale dabei teilweise ausgeschaltet werden.

Bei dieser Meßmethode besteht jedoch erheblicher Informationsverlust dadurch, daß lediglich eine Aussage über die mittlere Strahlenintensität des jeweils gemessenen Teilbündels möglich ist.

Dies ist darauf zurückzuführen, daß die bei der Messung eines bestimmten Abstands auf die Grenzfläche auftreffenden divergierenden oder konvergierenden Strahlen auf der Photodiode ein bestimmtes Intensitätssignal erzeugen, dieses aber nur den durchschnittlichen Durchtritts-bzw. Reflexionswinkel aller Strahlen des Teilbündels wiedergibt. Damit geht die Information über die tatsächlichen Eintrittswinkel des jeweiligen Strahls verloren, da jeder Strahl einen eigenen Eintrittswinkel aufweist, der zum Mittelstrahl hin bei beispielsweise konvergierendem Strahlenbündel abnimmt. Dies wird dann problematisch, wenn eine interferenzbedingte unterschiedliche Intensitätsverteilung entlang des Grenzflächenbereichs eines Strahlenbündels vorliegt.

Vom einleitend dargestellten Stand der Technik ausgehend liegt der Erfindung die Aufgabenstellung zugrunde, das Laser- oder Speckles-Rauschen der Meßwerte bei einem Triangulationsverfahren derart zu verringern, daß man auch bei sehr kleinen Lichtfleckdurchmessern, Abstandsänderungen mit hoher Genauigkeit vermessen kann, ohne dabei einen mittelwertbedingten Informationsverlust in Kauf nehmen zu müssen. Auf diese Weise soll vor allen Dingen die Möglichkeit geschaffen werden, die Rauhigkeit durch eine derartige Messung zu bestimmen.

Die Erfindung löst diese Aufgabenstellung durch die in den Patentansprüchen gemachten Vorschläge.

Im wesentlichen besteht die Erfindung somit darin, daß das von der Oberfläche gestreute/reflektierte Lichtbündel mit optischen Mitteln in zwei Lichtbündel mit näherungsweise derselben Flächenverteilung der Intensitäten quer zu ihrer Abstrahlrichtung zerlegt wird. Unter diesen Voraussetzungen kommt es zu einem Intensitätsverhältnis der beiden Teilbündel, welches von der Hauptstrahlrichtung des von der Oberfläche gestreuten/reflektierten Lichtbündels abhängig ist. Im Sinne der Erfindung liegt es dann, ein oder beide Teilbündel photodiodisch zu detektieren und als Maß der Rauhigkeit auszuwerten.

Zur Veranschaulichung der Erfindung wird auf die sie näher erläuternden Ausführungsbeispiele in den Zeichnungen Bezug genommen. Darin zeigen:
- Figur 1: eine erste Ausführungsform der Erfindung mit einem Umlenkprisma zur winkelabhängigen Zerlegung, und
- Figur 2: eine weitere Ausführungsform der Erfindung mit zwei im Gegentakt arbeitenden Umlenkprismen und einem an die beiden nachgeschalteten Photoempfänger angeschlossenen Differenzverstärker.

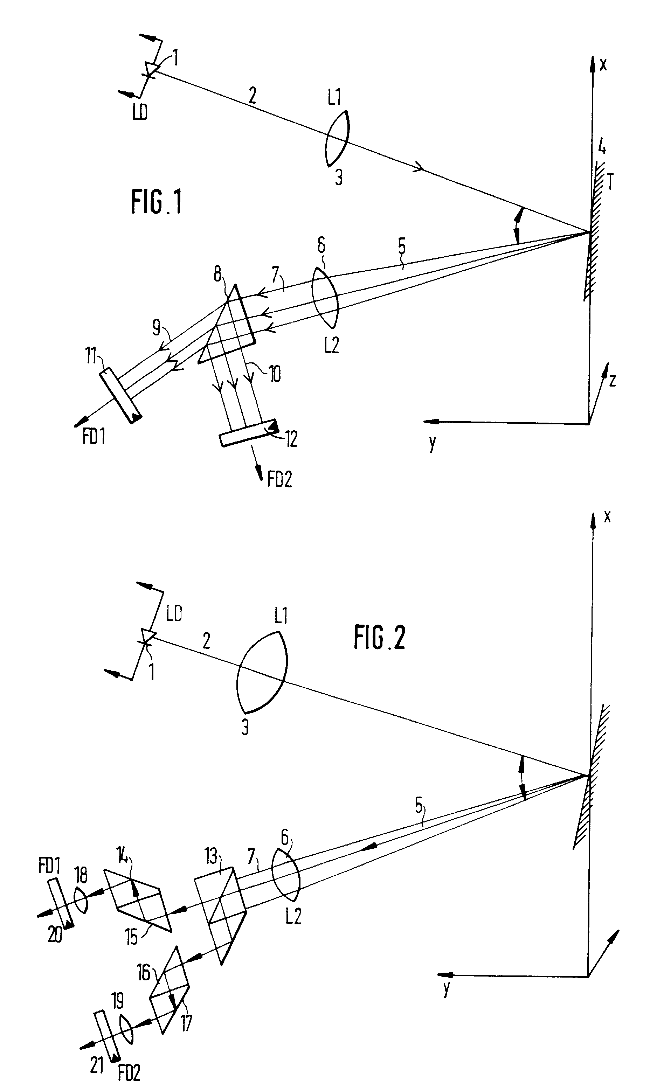

Figur 1 zeigt eine Laserdiode 1, deren kollimierter Laserstrahl 2 von einer abbildenden Optik 3 auf die zu vermessende Probenoberfläche 4 gerichtet wird. Das gestreute/reflektierte Lichtbündel 5 wird anschließend von einem Kollimator 6 in ein nahezu paralleles Lichtbündel 7 umgeformt. Dieses Lichtbündel 7 trifft dann auf ein Umlenkprisma 8, das dieses Bündel in zwei Teilbündel 9, 10 mit näherungsweise derselben Intensitätsflächenverteilung quer zu ihrer Hauptstrahlrichtung zerlegt. Betrachtet man die Hauptstrahlrichtung des Lichtbündels 7, so liegt der Einfallswinkel auf die Hypothenusenfläche des Umlenkprismas 8 vorzugsweise im Obergang zur Totalreflexion. Das Intensitätsverhältnis der Gesamtintensitäten (jeweils aufsummiert über den Querschnitt) der beiden Teilbündel 9, 10 ist dann nur noch vom Einfallswinkel, also von der Hauptstrahlrichtung des von der Oberfläche 4 gestreuten/reflektierten Lichtbündels 5 abhängig. Anschließend wird das reflektierte Teilbündel einem ersten und/oder das transmittierte Teilbündel einem zweiten Photoempfänger zugeführt. Die elektrischen Signale der beiden Photoempfänger 11, 12 (dabei handelt es sich z.B. um zwei Photodioden) können so verwendet werden, daß das Signal der einen der beiden Photodioden 11 oder 12 z.B. durch Veränderung der Lichtintensität der Laserdiode 1 auf einem konstanten Wert gehalten und das Signal der anderen Photodiode 11 oder 12 zur Anzeige gebracht wird. Auf diesem Wege kann man Reflexionsänderungen der Oberfläche 4 ausregeln. Eine andere Möglichkeit besteht darin, die Summe der beiden Photodioden konstant zu halten und die Differenz zur Anzeige zu bringen.

Figur 2 zeigt zunächst, wie in Ausführungsbeispiel 1, eine Laserdiode 1, deren kollimierter Laserstrahl 2 von einer abbildenden Optik 3 auf die zu vermessende Probenoberfläche 4 gerichtet und das gestreute/reflektierte Lichtbündel 5 anschließend von einem Kollimator 6 in ein nahezu paralleles Lichtbündel 7 umgeformt wird. Das Lichtbündel 7 wird anschließend durch einen Strahlteiler 13 in zwei gleiche Teilbündel zerlegt, die dann jeweils an den Hyothenusenflächen der zwei nachgeschalteten Prismen 14, 15 und 16, 17 umgelenkt werden. Die Einfallswinkel auf die Hypothenusenflächen der Umlenkprismen 14, 15 und 16, 17 liegen vorzugsweise im Obergang zur Totalreflexion. Die Prismen 14, 15 und 16, 17 werden so eingestellt, daß sich bei Winkeländerung des Lichtbündels 7 die Einfallswinkel des einen Teilbündels den Totalreflexionswinkeln nähern, während sich die Einfallswinkel des anderen Teilbündels von den Totalreflexionswinkeln entfernen. Die beiden je zweimal reflektierten Teilbündel werden dann jeweils über eine Linse 18, 19 einer Photodiode 20, 21 zugeführt, die transmittierten Anteile werden in diesem Ausführungsbeispiel nicht genutzt. Die Signalverarbeitung geschieht wie in Ausführungsbeispiel 1. Die durch die Einstellbarkeit der Prismensätze erreichte freie Wahl des Arbeitspunktes auf der Transmissions-Reflexionskurve ermöglicht eine optimale Ausnutzung der Empfindlichkeit des Verfahrens.

## Patentansprüche

1. Verfahren zur berührungsfreien Abstandsmessung für die Bestimmung des Profils, insbesondere der Rauheit von Oberflächen, in dem der Meßstrahl (2) eines Lasers (1) auf die zu messende Oberfläche (4) gerichtet und die von der Oberfläche (4) gestreuten/reflektierten Lichtstrahlen (5) von einer abbildenden Optik (6) gesammelt werden, die Lichtstrahlen (7) auf einer Grenzfläche (8,15,16) eines dielektrischen Mediums in der Nähe des Totalreflexionswinkels je nach Einfallswinkel mehr oder weniger reflektiert bzw. transmittiert werden und die reflektierten bzw. transmittierten Lichtstrahlen (9,10) je mit Photoempfängern (11,12,20,21) detektiert werden, dadurch gekennzeichnet, daß der Meßstrahl (2) des Lasers (1) bezüglich der Achse der abbildenden Optik (3) in einem bestimmten Winkel auf die zu messende Oberfläche (4) auftrifft, so daß die Lichtstrahlen (7) im wesentlichen parallel zueinander auf die Grenzfläche (8,15,16) des dielektrischen Mediums auftreffen.

2. Verfahren nach Anspruch 1, dadurch gekennzeichnet, daß das Signal einer der beiden Photoempfänger (11,12,20,21) durch Veränderung der Intensität des Meßstrahls (2) auf einem konstanten Wert gehalten und das Signal des anderen Photoempfängers (11,12,20,21) zur Anzeige gebracht wird oder die Summe der Signale der beiden Photoempfänger (11, 12; 20, 21) durch Veränderung der Intensität des Meßstrahls (2) konstant gehalten und die Differenz zur Anzeige gebracht wird.

3. Verfahren nach Anspruch 1 oder 2, dadurch gekennzeichnet, daß der Meßstrahl (2) in einem Strahlteiler (13) in zwei Lichtbündel geteilt wird, von denen jedes nach Zerlegung auf eine Grenzfläche (15,16) mit einem durch ein Prisma (14,17) gebildeten Glas/Luft-Übergang in der Nähe des Totalreflexionswinkels trifft, wobei die Prismen (14,17) so eingestellt sind, daß sich bei Winkeländerung des Lichtbündels bestehend aus den reflektionten parallelen Lichtstrahlen (7) die Einfallswinkel des einen Teilbündels den Totalreflexionswinkeln nähern, während sich die Einfallswinkel des anderen Teilbündels von den Totalreflexionswinkeln entfernen.

4. Verfahren nach Anspruch 3, dadurch gekennzeichnet, daß die Grenzflächen (15,16) der beiden Glas/Luft-Übergänge unter einem Winkel zueinander stehen, der höchstens gleich der Summe ihrer Totalreflexionswinkel zusätzlich zum Öffnungswinkel der Teilbündel ist.

5. Verfahren nach Anspruch 4, dadurch gekennzeichnet, daß die reflektierten Anteile der beiden Lichtbündel der Detektion durch Photoempfänger (20,21) unterzogen werden, wobei deren Signale einem Differenzverstärker zugeführt werden.

6. Vorrichtung zur berührungsfreien Abstandsmessung für die Bestimmung des Profils, insbesondere der Rauheit von Oberflächen, mit einem Laser (1) zum Aussenden eines Meßstrahls (2) über eine abbildende Optik (3) auf die zu vermessende Oberfläche (4), einem Kolimator (6), welcher die an der zu vermessenden Oberfläche (4) gestreuten/reflektierten Lichtstrahlen (5) in ein nahezu paralleles Lichtbündel (7) umformt, einem optischen Mittel zur Zerlegung des Lichtbündels (7), dessen Grenzfläche (8,15,16) bezüglich des Strahlengangs in einem Winkel in der Nähe des Grenzwinkels zur Totalreflektion angeordnet ist, mindestens zwei Photoempfängern (11,12,20,21) zur Detektion des an der Grenzfläche (8,15,16) des optischen Mittels zur Zerlegung des Lichtbündels reflektierten und transmittierten Lichtbündels und einer mit den Photoempfängern (11,12,20,21) verbundenen Signalverarbeitung, dadurch gekennzeichnet, daß der Laser (1) so ausgerichtet ist, daß der Meßstrahl (2) des Lasers bezüglich der Achse der abbildenden Optik (6) in einem bestimmten Winkel auf die zu messende Oberfläche (4) auftrifft, so daß die Lichtstrahlen (7) im wesentlichen parallel zueinander auf die Grenzfläche (8,15,16) des optischen Mittels zur Zerlegung des Lichtbündels (7) auftreffen.

7. Vorrichtung nach Anspruch 6, dadurch gekennzeichnet, daß als optisches Mittel zur Zerlegung des Lichtbündels (7) ein Umlenkprisma (8) vorgesehen ist, auf dessen Hypothenusenfläche das gestreute/reflektierte Lichtbündel unter einem Winkel in Nähe des Grenzwinkels der Totalreflexion gerichtet ist.

8. Vorrichtung nach Anspruch 6, dadurch gekennzeichnet, daß ein Strahlteiler (13) vorgesehen ist, dem austrittsseitig zwei nachgeschaltete Prismen (14,17) zugeordnet sind, auf deren Hypothenusenflächen die Teilbündel unter einem Einfallswinkel gerichtet sind, der sich dem Übergang zum Totalreflexionswinkel nähert, und daß die beiden je zweimal reflektierten Teilbündel jeweils einer Linse (18,19) und jeweils einem Photoempfänger (20,21) zugeführt sind, die einer Auswertung ihrer Signale unterliegen.

## Claims

1. A method for non-contact measurement of distance for the determination of the profile, particularly the roughness, of surfaces, in which the measuring beam (2) of a laser (1) is aimed at the surface (4) to be measured and the rays of light (5) which are scattered/reflected from the surface are collimated or condensed by imaging optics (6), the light rays (7) are reflected or transmitted at an interface (8, 15, 16) of a dielectric medium at an angle close to the total internal reflection angle, to a greater or less extent depending on the angle of incidence, and the reflected or transmitted light rays (9, 10) are detected by respective photodetectors (11, 12, 20, 21), characterised in that, with regard to the axis of the imaging optics (3), the measuring beam (2) of the laser (1) strikes the surface (4) to be measured at an angle selected such that the light rays (7) strike the interface (8, 15, 16) of the dielectric medium substantially parallel to one another.

2. A method according to claim 1, characterised in that the signal from one of the two photodetectors (11, 12, 20, 21) is kept at a constant value by varying the intensity of the measuring beam (2) and the signal from the second photodetector (11, 12, 20, 21) is sent to display means, or else the sum of the signals from the two photodetectors (11, 12; 20, 21) is kept constant by changing the intensity of the measuring beam (2) and the difference is sent to the display means.

3. A method according to claim 1 or claim 2, characterised in that the measuring beam (2) is split in a beam splitter (13) into two light pencils, each of which after splitting is caused to strike an interface (15, 16) having a glass/air transition formed by a prism (14, 17) at an angle near to the total internal reflection angle, the prisms (14, 17) being so adjusted that on changing the angle of the light pencil consisting of the reflected parallel light rays (7) the angles of incidence of the one partial pencil approach the total internal reflection angles while the angles of incidence of the other partial pencil move away from the total internal reflection angles.

4. A method according to claim 3, characterised in that the interfaces (15, 16) of the two glass/air transitions are at an angle to one another which is at most equal to the sum of their total internal reflection angles and the angle of spread of the partial pencil.

5. A method according to claim 4, characterised in that the reflected parts of the two light pencils are subjected to detection by photodetector means (20, 21) and the signals therefrom are passed to a sum-and-difference amplifier.

6. An apparatus for non-contact measurement of distance for determination of the profile, particularly the roughness, of surfaces, comprising a laser (1) for emitting a measuring beam (2) through imaging optics (3) on to the surface (4) to be measured, a collimator (6) which converts the light beam (5) scattered/reflected at the surface (4) to be measured into a substantially parallel light pencil (7), optical means for splitting the light pencil (7), the interface (8, 15, 16) of which is disposed relative to the path of the beam at an angle close to the limiting angle for total internal reflection, at least two photodetectors (11, 12, 20, 21) for detection of the light pencil reflected and transmitted at the interface (8, 15, 16) of the optical means for splitting the light pencil, and a signal processor connected to the photodetectors (11, 12, 20, 21), characterised in that the laser (1) is so directed that, with regard to the axis of the imaging optics (6), the measuring beam (2) of the laser strikes the surface (4) to be measured at an angle selected such that the light rays (7) strike the interface (8, 15, 16) of the optical means for splitting the light pencil (7) substantially parallel to one another.

7. An apparatus according to claim 6, characterised in that as optical means for splitting the light pencil (7) a deflecting prism (8) is provided on to the hypotenuse face of which the scattered/reflected light pencil is directed at an angle close to the total internal reflection angle.

8. An apparatus according to claim 6, characterised in that a beam splitter (13) is provided having associated with it, on the output side and further down the optical path, two prisms (14, 17) on to the hypotenuse faces of which the partial pencils are directed at an angle of incidence close to the transition to the total internal reflection angle, and that the two partial pencils, each of which has been reflected twice, are passed to respective lenses (18, 19) and to respective photodetectors (20, 21) the signals from which are subjected to evaluation.

## Revendications

1. Procédé pour la mesure de distance, sans contact, pour la détermination du profil, en particulier de la rugosité de surfaces, dans lequel le rayon de mesure (2) d'un laser (1) est dirigé sur la surface (4) à mesurer, et les rayons lumineux (5) dispersés/réfléchis par la surface (4) sont collectés par une optique de représentation (6), les rayons lumineux (7) étant selon l'angle d'incidence plus ou moins réfléchis ou transmis sur une surface limite (8, 15, 16) d'un milieu diélectrique à proximité de l'angle de réflexion totale et les rayons lumineux (9, 10) réfléchis, respectivement transmis, étant respectivement détectés à l'aide de photocapteurs (11, 12, 20, 21), caractérisé en ce que le rayon de mesure (2) du laser (1) touche par rapport à l'axe de l'optique de représentation (3) sous un angle déterminé, la surface (4) à mesurer, de manière que les rayons lumineux (7) touchent sensiblement parallèlement la surface limite (8, 15, 16) du milieu diélectrique sensiblement parallèlement les uns aux autres.

2. Procédé selon la revendication 1, caractérisé en ce que le signal de l'un des deux photocapteurs (11, 12, 20, 21) est maintenu à une valeur constante par modification de l'intensité du rayon de mesure (2) et le signal de l'autre photocapteur (11, 12, 20, 21) est soumis à affichage, ou bien la somme des signaux des deux photocapteurs (11, 12; 20, 21) est maintenue constante par modification de l'intensité du rayon de mesure (2) et la différence étant mise en affichage.

3. Procédé selon la revendication 1 ou 2, caractérisé en ce que le rayon de mesure (2) est divisé dans un diviseur de rayon (13) en deux faisceaux lumineux, dont chacun tombe, après décomposition, sur une surface limite (15, 16), avec une transition verre/air constituée par un prisme (14, 17), à proximité de l'angle de réflexion totale, les prismes (14, 17) étant réglés de manière que lors de la modification d'angle du faisceau lumineux constitué des rayons lumineux (7) parallèles réfléchis, les angles d'incidence d'un faisceau partiel s'approchent des angles de réflexion totale, tandis que les angles d'incidence de l'autre faisceau partiel s'éloignent des angles de réflexion totale.

4. Procédé selon la revendication 3, caractérisé en ce que les surfaces limites (15, 16) des deux transitions verre/air sont orientées l'une par rapport à l'autre sous un angle qui au maximum est égal à la somme de leurs angles de réflexion totale, en plus de l'angle d'ouverture des faisceaux partiels.

5. Procédé selon la revendication 4, caractérisé en ce que les fractions réfléchies des deux faisceaux lumineux sont soumises à la détection par des photocapteurs (20, 21), leurs signaux étant amenés à un amplificateur de différence.

6. Procédé de mesure de distance sans contact pour la détermination du profil, en particulier de la rugosité de surfaces, avec un laser (1) destiné à émettre un rayon laser (2) par l'intermédiaire d'une optique de représentation (3), sur la surface (4) à mesurer, un collimateur (6), qui transforme les rayons lumineux (5) dispersés/réfléchis sur la surface (4) à mesurer, en un faisceau lumineux (7) à peu près parallèle, un moyen optique destiné à décomposer le faisceau lumineux (7), dont la surface limite (8, 15, 16) est disposée près de l'angle limite de réflexion totale, quant au cheminement du rayon, au moins deux photocapteurs (11, 12, 20, 21) pour la détection réfléchi et transmis sur la surface limite (8, 15, 16) du moyen optique destiné à effectuer la décomposition et un dispositif de traitement du signal, relié aux photocapteurs (11, 12, 20, 21), caractérisé en ce que le laser (1) est dirigé de manière que le rayon de mesure (2) du laser touche la surface (4) à mesurer sous un angle déterminé par rapport à l'axe de l'optique de représentation (6), de manière que les rayons lumineux (7) touchent la surface (8, 15, 16) du moyen optique de décomposition du faisceau lumineux (7) en étant sensiblement parallèles entre eux.

7. Dispositif selon la revendication 6, caractérisé en ce qu'est prévu comme moyen optique pour la décomposition du faisceau lumineux (7), un prisme de renvoi (8) sur la surface d'hypoténuse duquel le faisceau lumineux dispersé/réfléchi est dirigé sous un angle proche de l'angle limite de réflexion totale.

8. Dispositif selon la revendication 6, caractérisé en ce qu'est prévu un diviseur de rayon (13), auquel sont associés côté sortie deux prismes (14, 17) montés en aval, sur les surfaces d'hypoténuse desquels les faisceaux partiels sont dirigés sous un angle d'incidence qui est proche de la transition vis-à-vis de l'angle de réflexion totale, et en ce que les deux faisceaux partiels ayant été réfléchis deux fois sont amenés chaque fois à une lentille (18, 19) et chaque fois à un photocapteur (20, 21), qui soumettent leurs signaux à une évaluation.
